# EUROPÄISCHE PATENTANMELDUNG

(11) **EP 0 819 931 A2**
(43) Veröffentlichungstag der Anmeldung: **21.01.1998**
(21) Anmeldenummer: 97111823.7
(22) Anmeldetag: 11.07.1997
(51) Int. Cl.: G01N 21/21

(54) **Verfahren zur quantitativen und/oder qualitativen Bestimmung von Atomen oder Molekülen**

(30) Priorität: 19.07.1996 DE 19629243
(71) Anmelder: Riss, Udo, 23909 Ratzeburg (DE); Meineke, Dietmar, 22946 Trittau (DE)
(72) Erfinder: Riss, Udo, 23909 Ratzeburg (DE); Meineke, Dietmar, 22946 Trittau (DE)
(74) Vertreter: Vollmann, Heiko, Dipl.-Ing.

(57) **Zusammenfassung**

Auf einem festen oder flüssigen flächigen Träger (1) werden Fängermoleküle (2) verankert, die selektiv andere Moleküle (5) oder Atome binden können. Die Trägeroberfläche wird dann ellipsometrisch vermessen, indem die Änderung des Polarisationszustandes erfaßt wird, die linear polarisiertes Licht (3) bei der Reflektion am Träger (1) erfährt. Danach wird der Träger (1) mit den darauf verankerten Fängermolekülen (2) zur Ankopplung der zu bestimmenden Atome oder Moleküle (5) letzteren ausgesetzt, wonach eine erneute ellipsometrische Vermessung erfolgt. Die Änderungen im Polarisationszustand werden mit anhand von Referenzproben ermittelten Werten verglichen, wonach eine qualitative und quantitative Bestimmung der angekoppelten Atome oder Moleküle erfolgt.

## Beschreibung

Die Erfindung betrifft ein Verfahren nach dem Oberbegriff des Anspruches 1.

Die quantitative und qualitative Erfassung von Atomen und Molekülen gewinnt heutzutage mehr und mehr an Bedeutung. Insbesondere in der Medizintechnik, Biotechnik und der pharmazeutischen Technik werden solche Verfahren beispielsweise für die Erfassung von Antigen-/Antikörperkomplexen an festen oder flüssigen Phasen verwendet. Für die in vitro Diagnose verschiedener Erkrankungen nutzt man die spezifischen Bindungseigenschaften von Antikörpern zu ihren Antigenen. Die Analyse, insbesondere das Feststellen von bestimmten Molekülen und die quantitative Bestimmung dieser Moleküle gibt Aufschluß über beispielsweise den Immunstatus, den Krankheitsverlauf, Mangel oder Überschuß von körpereigenen Substanzen, Defekte im Erbgut und vieles mehr.

Bekannte Verfahren dieser Art arbeiten dabei so, daß mit Hilfe physikalischer und/oder chemischer Verfahren, beispielsweise Antikörper oder Antigene aus komplexen Stoffgemischen selektiv gebunden werden und diese dann direkt oder indirekt nachgewiesen bzw. quantifiziert werden. Beispiele hierfür sind die Bestimmung von Immunglobulinen in Körperflüssigkeiten, Bestimmung von Antikörpern bei Infektionserkrankungen (IGG, IGA, IGM), Bestimmung von Antikörpern bei Allergien (IGE, IGG, IGM), Bestimmung von Auto-Immun-Antikörpern bei Immunerkrankungen, beispielsweise Rheuma, Bestimmung von Proteinen und Peptiden, Bestimmung von polyklonalen und monoklonalen Antikörpern, von Homonen, Bestimmung von Abbauprodukten oder Ausscheidungen, beispielsweise als Krankheitsindikatoren, Bestimmung von nicht körpereigenen Substanzen, z. B. Medikamenten, Drogen, Umweltchemikalien.

Die derzeit insbesondere in der Medizintechnik angewandten Verfahren sind apparativ- und zeitaufwendig, teilweise hochkompliziert und hinsichtlich ihrer Aussagekraft risikobehaftet. Diese bekannten Verfahren arbeiten im wesentlichen nach dem Prinzip, daß nämlich zunächst Moleküle, die selektiv andere Moleküle oder Atome binden können, zum Beispiel Antigene, an eine feste Phase als Träger gebunden werden. Nach der Inkubation, bei der alle in Frage kommenden Moleküle an der festen Phase gebunden werden, wird das überschüssige oder nicht gebundene Material durch einen oder mehrere Waschschritte entfernt. Dann wird diese mit Molekülen zur selektiven Bindung, zum Beispiel Antigenen, behaftete feste Phase der zu untersuchenden Probe ausgesetzt. Nach dem Schlüssel-/Schloßprinzip werden die in der Probe befindlichen Moleküle oder Atome, zum Beispiel Antikörper, an die Moleküle/Antigene der festen Phase gebunden, sofern sie vorhanden sind (Primärbindung). Nach einer Inkubation, nach der alle in Frage kommenden Moleküle gebunden sind, erfolgt dann wieder in einem oder mehreren Waschschritten die Entfernung des überschüssigen, nicht gebundenen Materials. Gegebenenfalls wird nun zur Verstärkung ein weiterer Antikörper tierischen Ursprungs zugegeben, der gegen die fragliche Substanz gerichtet ist. Nach erfolgter Inkubation erfolgt wiederum in einem oder mehreren Waschschritten das Entfernen des überschüssigen nicht gebundenen Materials.

Schließlich erfolgt die Zugabe von vorher markierten Molekülen (z.B. durch Enzyme, radioaktive Substanzen, lichtemittierende Moleküle oder dergleichen) ein qualitativer oder quantitativer Nachweis der Primärbindungen durch aktivierbare Zustände, die gemessen werden. Auch hierfür ist wiederum eine Inkubation erforderlich sowie nachfolgend ein oder mehrere Waschschritte, um überschüssiges Material zu entfernen. Nach so erfolgter Markierung des Gesamtkomplexes wird der Komplex direkt oder gegebenenfalls nach einer Reagenzzugabe einer Messung unterzogen, die Aufschluß über Art und Menge der gebundenen Moleküle, beispielsweise der Antikörper, gibt, die zu ermitteln sind. Die Varianz der Meßmethoden ist ebenso groß wie die Varianz der Verfahrensschritte. Allen gemeinsam ist jedoch eine vergleichsweise langwierige Dauer, die durch die Zugabeschritte und die Inkubationen bestimmt wird. In der Praxis erfordern solche Verfahren Durchführungszeiten im Bereich von wenigen Stunden bis zu mehreren Tagen. Wegen der zahlreichen unterschiedlichen Verfahrensschritte und der dabei teilweise in engen Toleranzen einzuhaltenden Verfahrensparametern sind solche Untersuchungen in der Regel nur von gut geschultem Personal durchführbar. Die Qualität der Ergebnisse hängt von der Summe der Qualitäten aller Verfahrensschritte ab. Dies bedingt, daß bekannte Verfahren eine relativ hohe Ungenauigkeit aufweisen, da sich die Toleranzen der einzelnen Verfahrensschritte addieren. Im übrigen sind die Testverfahren meistens so ausgelegt, daß die an der festen Phase gebundenen Moleküle nur zur Bindung einer Molekülklasse vorgesehen sind, so daß beispielsweise zur Ermittlung verschiedener Immunglobuline auch unterschiedliche Verfahren durchzuführen sind.

Es wird in diesem Zusammenhang auf folgende Literaturstellen hingewiesen:
R.H. Burdon, P.H. van Knippenberg, eds.: Laboratory Techniques in Biochemistry and Molecular Biology, Vol. 15; Elsevier Science Publishers B.V., Amsterdam, New York, Oxford; 1988
L. Hudson, F.C. Hay: Practical Immunology; Blackwell Scientific Publications, Oxford, London, Edinburgh, Melbourne, 1980

Neben dem enormen zeitlichen, apparativen und personellen Aufwand entsteht bei diesen bekannten Verfahren eine beträchtliche Menge von Abfall, insbesondere chemisch oder radioaktiv belasteter Abfall, der zum Teil als Sondermüll zu entsorgen ist. Die bei den Verfahren anzuwendenden Wirkstoffe in Form von Flüssigkeiten sind häufig instabil und müssen vor mikrobiellem Befall geschützt werden. Auch der Energieverbrauch ist nicht unerheblich, da die Inkubationsschritte in der Regel bei Körpertemperatur, also bei 37 Grad Celsius, durchgeführt werden und die Geräte üblicherweise Tag und Nacht auf dieser Temperatur gehalten werden. Seit langem sucht man daher nach einfacheren und zuverlässigeren Testverfahren.

Ein anfangs sehr erfolgversprechender Weg, die Biosensorik auf Halbleiterbasis, bei der die Veränderung der elektrischen Eigenschaften der auf dem Trägermaterial aufgebrachten Moleküle zur Bestimmung der Molekülbindung dienen soll, hat den erwarteten Erfolg nicht gebracht, da die sich durch selektive Molekülbindung einstellenden Änderungen der elektrischen Eigenschaften entweder nicht besonders signifikant oder aber nur unzulänglich meßbar sind. Es haben sich daher in der Praxis solche nach der Methode der Biosensorik auf Halbleiterbasis arbeitenden Verfahren nur für Zweikomponentensysteme bedingt durchgesetzt. Doch auch diese Verfahren sind nicht sehr genau. Die als Träger erforderliche Halbleiterbasis ist später zu entsorgen.

Vor diesem Hintergrund liegt der Erfindung die Aufgabe zugrunde, ein Verfahren zur quantitativen und/oder qualitativen Bestimmung von Atomen und Molekülen zu schaffen, mit dem mit vergleichsweise geringem gerätetechnischen Aufwand schnell, einfach und mit hoher Zuverlässigkeit diese Bestimmungen durchgeführt werden können.

Diese Aufgabe wird gemäß der Erfindung durch das in Anspruch 1 bzw. in Anspruch 2 angegebene Verfahren gelöst.

Demgemäß sieht die Erfindung vor, auf einem festen oder flüssigen flächigen Träger solche an sich bekannten Moleküle - es können bei speziellen Anwendungen auch Atome in Frage kommen - zu verankern, die in der Lage sind, selektiv andere bestimmte Moleküle oder Atome zu binden - diese Moleküle werden nachfolgend als Fängermoleküle bezeichnet. Der mit diesen Fängermolekülen versehene Träger wird dann mit elektromagnetisch polarisierten Wellen bestrahlt, wobei die vorzugsweise reflektierten oder aber gegebenenfalls auch die durchstrahlenden Wellen mittels einer geeigneten Vorrichtung empfangen und hinsichtlich ihres Polarisationszustandes erfaßt werden. Anschließend wird der Träger mit den darauf verankerten Fängermolekülen dem zu untersuchenden Gut, beispielsweise einer Blutprobe, ausgesetzt. Danach wird der Träger mit den darauf verankerten Fängermolekülen sowie den gegebenenfalls dadurch gebundenen weiteren Molekülen (Liganden) oder Atomen den elektromagnetisch polarisierten Wellen ausgesetzt, wonach wiederum die reflektierten oder gegebenenfalls auch durchstrahlenden Wellen empfangen und deren Polarisationszustand im Vergleich zu dem voremnittelten Polarisationszustand erfaßt wird. Die Änderung des Polarisationszustandes läßt dann anhand vorher von Referenzproben ermittelter Referenzwerte unmittelbare Rückschlüsse auf Art und Anzahl der angekoppelten Moleküle oder Atome zu. Es können auch die aus der Probe zu bestimmenden Moleküle als Fängermoleküle auf dem Träger verankert werden. Die selektive Bindung erfolgt dann zu sogenannten Marker-Molekülen.

Die vorbeschriebene Verfahrensweise kann meßtechnisch dadurch modifiziert werden, daß auf die erste Messung des mit Fängermolekülen oder -atomen versehenen Trägers verzichtet wird und anstelle dessen aus einer anderen Probe, die nicht oder mit einer bekannten Referenzprobe inkubiert wird, entsprechende Werte für die erste Messung ermittelt oder errechnet werden. In diesem Falle wird zwar im physischen Sinne keine erste Messung durchgeführt, die entsprechenden benötigten Werte werden aber auf indirekte Weise ermittelt.

Das Verfahren der Ellipsometrie ist seit langem bekannt, es wird in diesem Zusammenhang beispielhaft auf das unter dem Titel "Selected Papers on Ellipsometry" von R. M. A. Azzam herausgegebene Buch, das im SPIE Optical Engineering Press, USA unter ISBN 0-8194-0570-1 erschienen ist, verwiesen. Das erfindungsgemäße Verfahren, das mit einem handelsüblichen Ellipsometer ausgeführt werden kann, kann schnell und vergleichsweise einfach durchgeführt werden. Es arbeitet hochgenau, da handelsübliche Ellipsometer den Polarisationszustand, insbesondere die Änderung der Polarisation der empfangenen Wellen im Vergleich zu den ausgesandten Wellen, hochgenau ermitteln können. So kann die Polarisationsänderung beispielsweise mit einer Genauigkeit von
≤ 0,002° im Δ/ψ-Diagramm
(aus diesen Werten lassen sich bekanntermaßen Brechungsindex und Schichtdicke rechnerisch ermitteln)
bestimmt werden. Damit sind beispielsweise Schichtdicken von Submonolayer-Schichten nachweisbar, die im statistischen Mittel tausendfach dünner als der Durchmesser des Wasserstoffatomes sind. Entsprechend genau arbeitet das erfindungsgemäße Verfahren, so daß derzeit Sensitivitäten im Bereich zwischen 0,01 und 0,1 % erreicht werden.

Das erfindungsgemäße Verfahren wird vorzugsweise mit näherungsweise linear (schwach elliptisch) polarisiertem Licht durchgeführt, das bevorzugt von einem Laser ausgesendet wird, da dann keine gesonderte Filterung zum Erhalt polarisierten Lichtes erforderlich ist. Die Auswertung erfolgt vorzugsweise aufgrund von am Träger reflektierten Wellen mit Hilfe einer Fotodiode mit vorgeschaltetem Polarisationsprisma, das durch einen Schrittmotor hochgenau um definierte Winkelschritte drehbar ist. Ein solcher Ellipsometeraufbau ist an sich bekannt, es wird in diesem Zusammenhang auf das unter der Typenbezeichnung EL X-1-Submonolayer-Ellipsometer der DRE-Dr.-Riss-Ellipsometerbau GmbH in 23909 Ratzeburg verwiesen. Durch geeignete Wahl der auf dem Träger zu verankernden Fängermoleküle kann das Verfahren für praktisch beliebige biologische, medizinische oder pharmazeutische Tests eingesetzt werden. Die auf dem Träger zu verankernden Fängermoleküle sind lediglich so zu wählen, daß sie die zu detektierenden Atome, Moleküle oder Molekülverbände selektiv zu binden in der Lage sind. Das erfindungsgemäße Verfahren wird aufgrund seiner hohen Genauigkeit in der Vielzahl der Fälle auch in der Lage sein, komplexere Anwendungen zu lösen, d. h. ein, zwei oder mehr zu detektierende Stoffe mit nur einem Verfahren zu bestimmen.

Das erfindungsgemäße Verfahren hat insbesondere für den Bereich der vorerwähnten biomedizinischen Testverfahren erhebliche Vorteile. Zu erwähnen ist die im Vergleich zu bekannten Verfahren um Zehnerpotenzen höhere Sensitivität, ein geringer Materialverbrauch, deutliche Zeitersparnis, erheblich geringere Kosten, wesentlich geringere Umweltbelastung und nicht zuletzt ein deutlich geringerer Entwicklungsaufwand für neue Tests. Der Materialverbrauch liegt derzeit bei etwa 0,2 µl für die auf dem Träger zu verankernden Fängermoleküle sowie das zu testende Probenmaterial. Die eingangs beschriebenen aufwendigen Waschschritte können weitgehend entfallen, Sekundärinkubationen und Nachweise sind nicht mehr erforderlich. Auch ist die Analyse verschiedener Analytentypen mit nur einem Verfahrensschritt möglich. Die reine ellipsometrische Meßdauer liegt im Sekundenbereich, die erforderliche Inkubation kann auf beispielsweise 10 Minuten beschränkt werden. Die Zahl der Analysen ist dabei nicht limitiert und der Prozeß voll automatisierbar. Da durch das erfindungsgemäße Verfahren zum Nachweis von Allergien, Krankheiten und dergleichen nur Antigene und gegen diese gerichtete Antikörper vorhanden sein müssen, entfällt die Suche nach Antikörpern, die gegen primäre Antikörper gerichtet sind, und modifizierten Antikörpern, die gegen sekundäre Antikörper gerichtet sind. Dadurch läßt sich der Entwicklungsaufwand für neue Tests erheblich vermindern.

Das erfindungsgemäße Verfahren kann in seiner Empfindlichkeit praktisch beliebig eingestellt werden, dadurch, daß der zu vermessenden Probe entweder sofort Moleküle (z. B. Antikörper oder Antigene) zugegeben werden, die sich noch vor dem eigentlichen Kopplungsprozeß mit den zu vermessenden Molekülen verbinden, oder ähnlich wie bei einem ELISA-Test eine zusätzliche Inkubation mit Molekülen (z. B. Antikörpern) erfolgt. Dieser zusätzliche Kopplungsprozeß wird vorteilhafterweise zur Erhöhung der Empfindlichkeit eingesetzt. Der Sinn besteht darin, die Größe und optischen Eigenschaften (z. B. den Brechungsindex) des eingefangenen Moleküls bzw. Molekülkomplexes zu verändern. Diese Verfahrensweise ist insbesondere bei kleinen Molekülen oder bei einer geringen Molekülkonzentration in der Probe sinnvoll, um die Empfindlichkeit des Verfahrens zu steigern.

Das erfindungsgemäße Verfahren ist nicht auf die vorerwähnten Anwendungsfälle beschränkt, es ist zur Bestimmung von Art und Menge einer Vielzahl von biologischer und chemischer Reaktanden geeignet. In diesem Zusammenhang besonders hervorzuheben ist der ellipsometrische Nachweis von Immunglobulinen, von Auto-Immunantikörpern, von Proteinen oder Peptiden, von DNA's (**d**esoxiribo**n**ucleid **a**cid) sowie von RNA's (**r**ibo**n**ucleic **a**cid), von Rezeptoren oder deren Aktivatoren auf bzw. in biologischen Membranen sowie von Molekülen oder deren Bindungspartnern auf bzw. in künstlichen Membranen.

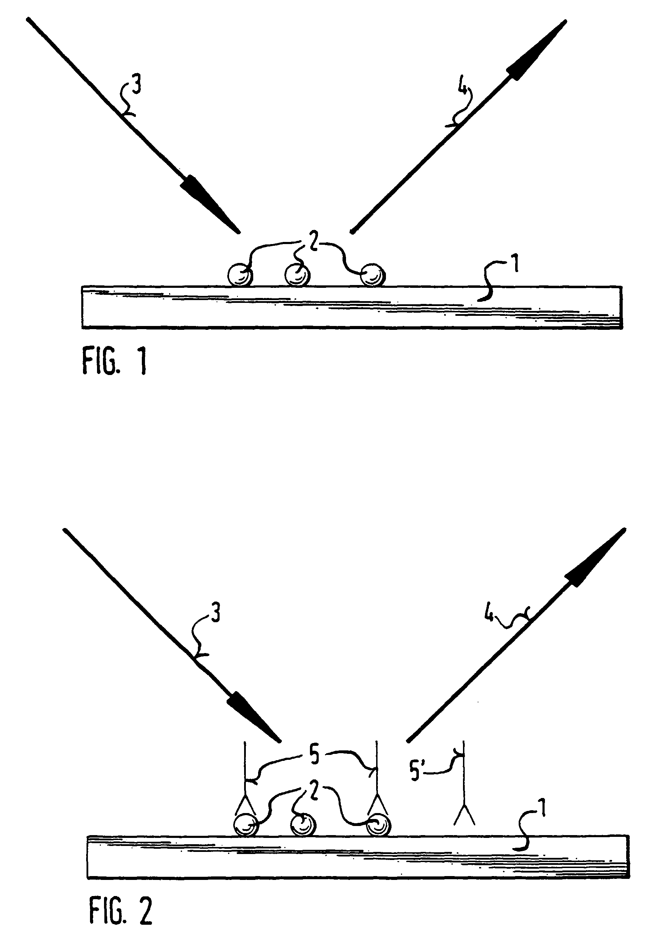

Die Erfindung ist nachfolgend anhand von zwei Ausführungsbeispielen näher erläutert. Die Figuren 1 und 2 zeigen dabei stark schematisiert den Verfahrensablauf.

Nachfolgend wird der prinzipielle Verfahrensablauf anhand der Figuren 1 und 2 erläutert. Auf einem flächigen Träger 1 werden zunächst Fängermoleküle 2 verankert, die in der Lage sind, selektiv bestimmte Moleküle oder Atome (sogenannte Liganden) zu binden. Diese Fängermoleküle 2 werden an eine fest oder auch flüssige Phase des Trägers 1 gebunden und nachfolgend einer ersten ellipsometrischen Untersuchung ausgesetzt. Dabei wird der Träger mit den darauf befindlichen Fängermolekülen am Probenhalter eines Ellipsometers befestigt, wonach näherungsweise linear polarisiertes Licht 3, das beispielsweise aus einem Helium-Neonlaser kommt, in einem vorbestimmten Winkel schräg zur Trägeroberfläche auf den Träger 1 gerichtet wird. Das vom Träger 1 reflektierte Licht 4 wird über ein Polarisationsprisma einer Fotodiode zugeführt. Das Polarisationsprisma ist über einen hochpräzisen Schrittmotor um die Längsachse des reflektierten Lichtstrahls 4 drehbar, um in an sich bekannterweise die Achsen und die Elliptizität der den Polarisationszustand definierenden Polarisationsellipse zu bestimmen. Es wird also ausgehend von dem vorgegebenen Polarisationszustand des einfallenden Lichtstrahls 3 die Phasen- und Amplitudenänderung des vom Träger 1 mit der darauf befindlichen Schicht von Fängermolekülen 2 reflektierten Lichtes 4 ermittelt. Durch diese Werte können beispielsweise der Brechungsindex und die mittlere Schichtdicke der Fängermoleküle bestimmt werden.

Sodann wird der Träger dem zu untersuchenden Material, beispielsweise einer Blutprobe, ausgesetzt, und zwar über eine bestimmte Inkubationszeit. Innerhalb dieser Zeit binden die Fängermoleküle 2, sofern in der Probe vorhanden, selektiv Atome oder Moleküle 5 nach dem Schlüssel-Schloß-Prinzip, die dann zu einer Veränderung der auf dem Träger 1 befindlichen Schicht führen. Nach der Inkubation wird der Träger einem Waschprozeß unterworfen, um die nicht gebundenen Moleküle 5 zu entfernen. Durch erneute ellipsometrische Messung werden nun diese Änderungen gegenüber der Vormessung erfaßt und anhand vorher von Referenzproben ermittelten Referenzwerten verglichen. Da unterschiedliche Moleküle, die an den Fängermolekülen 2 ankoppeln, Schichten unterschiedlicher optischer Reflexionseigenschaften bilden, kann bei geeigneter Auslegung des Verfahrens in der Regel zunächst qualitativ bestimmt werden, ob und gegebenenfalls welche Moleküle 5 an den Fängermolekülen 2 gebunden worden sind. Weiterhin kann in der Regel auch eine quantitative Aussage, also über die Menge der gebundenen Moleküle 5, gemacht werden.

Mit dem vorstehend beschriebenen Verfahren kann beispielsweise der Urin eines Patienten auf Albuminurie (Ausscheidung von Albumin mit dem Harn) untersucht werden. Bei der Albuminurie wird mit dem Harn Eiweiß ausgeschieden. Ein positiver Befund kann auf Erkrankungen des Nierengewebes oder eine Stauungsniere, zum Beispiel bei Herzinsuffizienz, hindeuten. Bei Entzündungen des Nierenbeckens und der Blase führen Leukozyten und Erythrozyten ebenfalls zum positiven Eiweißtest. Es sind somit je nach Krankheit Albumine, Globuline und andere Blut-Eiweißkörper im Harn zu unterscheiden. Dabei gilt es beispielsweise, harmlose Albuminurie, wie zum Beispiel nach außergewöhnlichen Anstrengungen, bei denen Zellen oder Zellbruchstücke im Urin auftauchen, zu erkennen.

Mit dem erfindungsgemäßen Verfahren kann dies wie folgt ermittelt werden. Es wird zunächst ein geeigneter Träger mit einer aktivierten festen Phase aus kobaltaktiviertem Polystrol gewählt, der polare Moleküle physikalisch bindet. Auf diesen Träger wird nun die Urinprobe aufgebracht. Nach einer Inkubationszeit von 5 Minuten binden Albumine, andere Proteine wie Globuline und proteinhaltige Zellbruchstücke und Zellen fest an dieser aus kobaltaktiviertem Polystyrol bestehende feste Phase. Die gesuchten Moleküle selbst bilden also hier die Fängermoleküle. Der so hergestellte Träger wird dann ellipsometrisch vermessen. Die polarisationsellipsometrischen Kenngrößen, Orientierung und Elliptizität, bzw. Δ und ψ, werden ermittelt und gespeichert. Dann werden dem Träger einzeln oder als Gemisch Marker-Moleküle (z. B. mono-, polyklonale Antikörper), zugesetzt, die spezifisch an bestimmte Eiweiße oder Zellmembranstrukturen binden. Umgekehrt betrachtet, sind die als Fängermoleküle auf dem Träger verankerten Proteine in der Lage, selektiv diese Marker-Moleküle zu binden. Nach einer Inkubation von 5 Minuten erfolgt eine erneute ellipsometrische Vermessung, wobei aus den Differenzen der beiden Messungen zum einen qualitativ bestimmt werden kann, welche Marker-Moleküle und zum anderen quantitativ, in welcher Häufigkeit sich die Marker-Moleküle an den Fängermolekülen angelagert haben. Anhand von vorher von Referenzproben ermittelten und gespeicherten Daten kann nun die qualitative und quantitative Bestimmung der Marker-Moleküle und somit letztlich der in diesem Fall interessierenden Fängermoleküle (den Proteinen) gemacht werden, wodurch Rückschlüsse auf die Art der Erkrankung möglich sind.

Wie das vorstehend beschriebene Ausführungsbeispiel belegt, spielt es für das erfindungsgemäße Verfahren keine Rolle, ob der zu testende Stoff als Fängermolekül oder aber als Molekül (Ligand), das mit dem Fängermolekül reagiert, eingebunden wird. Hier ist das Verfahren jeweils in geeigneter Weise zu modifizieren.

## Patentansprüche

1. Verfahren zur quantitativen und/oder qualitativen Bestimmung von Atomen oder Molekülen, gekennzeichnet durch folgende nacheinander durchzuführende Verfahrensschritte:
a) auf einem festen oder flüssigen flächigen Träger (1) werden Atome oder Moleküle (2) verankert, die selektiv andere Moleküle (5) oder Atome binden können,
b) elektromagnetisch polarisierte Wellen (3) werden auf den mit Atomen oder Molekülen (2) versehenen Träger (1) gesendet,
c) die von dem mit Atomen oder Molekülen (2) versehenen Träger (1) reflektierten oder durchstrahlenden Wellen (4) werden empfangen,
d) mindestens ein Teil des Polarisationszustandes der empfangenen Wellen wird ermittelt,
e) der Träger (1) mit den darauf verankerten Atomen oder Molekülen (2) wird zur Ankopplung der zu bestimmenden Atome oder Moleküle (5) letzteren ausgesetzt,
f) die Verfahrensschritte b) bis d) werden erneut durchgeführt, die Änderung im Polarisationszustand im Vergleich zu dem zuvor ermittelten wird erfaßt und anhand ermittelter Referenzwerte wird die Anzahl und/oder Art der angekoppelten Atome oder Moleküle (5) bestimmt.

2. Verfahren zur quantitativen und/oder qualitativen Bestimmung von Atomen oder Molekülen, gekennzeichnet durch folgende nacheinander durchzuführende Verfahrensschritte:
a) auf einem festen oder flüssigen flächigen Träger (1) werden Atome oder Moleküle (2) verankert, die selektiv andere Moleküle (5) oder Atome binden können.
b) der Träger (1) mit den darauf verankerten Atomen oder Molekülen (2) wird zur Ankopplung der zu bestimmenden Atome oder Moleküle (5) letzteren ausgesetzt,
c) elektromagnetisch polarisierte Wellen (3) werden auf den mit Atomen oder Molekülen (2) versehenen Träger (1) gesendet,
d) die von dem mit Atomen oder Molekülen (2) versehenen Träger (1) reflektierten oder durchstrahlenden Wellen (4) werden empfangen,
e) mindestens ein Teil des Polarisationszustandes der empfangenen Wellen wird ermittelt,
f) die Änderung im Polarisationszustand im Vergleich zu einer Referenzprobe wird erfaßt, und anhand ermittelter Referenzwerte wird die Anzahl und/oder Art der angekoppelten Atome oder Moleküle (5) bestimmt.

3. Verfahren nach Anspruch 1 oder 2, dadurch gekennzeichnet, daß die elektromagnetischen Wellen durch polarisiertes Licht eines Lasers gebildet werden.

4. Verfahren nach einem der vorhergehenden Ansprüche, dadurch gekennzeichnet, daß nach dem Verankern der Atome oder Moleküle (2) am Träger (1) dieser zum Entfernen von überschüssigen, nicht gebundenen Atomen und/oder Molekülen (5') abgewaschen wird.

5. Verfahren nach einem der vorhergehenden Ansprüche, dadurch gekennzeichnet, daß der Träger nach Ankopplung der zu bestimmenden Atome oder Moleküle zum Entfernen überschüssigen Stoffes abgewaschen wird.

6. Verfahren nach einem der vorhergehenden Ansprüche, dadurch gekennzeichnet, daß es unter Einsatz eines Ellipsometers erfolgt.

7. Verfahren nach einem der vorhergehenden Ansprüche, dadurch gekennzeichnet, daß die auf dem Träger verankerten Moleküle Antigene oder Antikörper sind.

8. Verfahren nach einem der vorhergehenden Ansprüche, dadurch gekennzeichnet, daß das Verfahren zum Nachweis von Immunglobulinen verwendet wird.

9. Verfahren nach einem der vorhergehenden Ansprüche, dadurch gekennzeichnet, daß das Verfahren zum Nachweis von Auto-Immun-Antikörpern verwendet wird.

10. Verfahren nach einem der vorhergehenden Ansprüche, dadurch gekennzeichnet, daß das Verfahren zum Nachweis von Proteinen oder Peptiden verwendet wird.

11. Verfahren nach einem der vorhergehenden Ansprüche, dadurch gekennzeichnet, daß das Verfahren zum Nachweis von DNA's verwendet wird.

12. Verfahren nach einem der vorhergehenden Ansprüche, dadurch gekennzeichnet, daß das Verfahren zum Nachweis von RNA's verwendet wird.

13. Verfahren nach einem der vorhergehenden Ansprüche, dadurch gekennzeichnet, daß das Verfahren zum Nachweis von Rezeptoren oder deren Aktivatoren auf/in biologischen Membranen verwendet wird.

14. Verfahren nach einem der vorhergehenden Ansprüche, dadurch gekennzeichnet, daß das Verfahren zum Nachweis von Molekülen oder deren Bindungspartnern auf/in künstlichen Membranen verwendet wird.

15. Verwendung der Ellipsometrie zur Bestimmung von Art und/oder Menge biologischer und chemischer Reaktanden.

16. Verfahren nach einem der vorhergehenden Ansprüche, dadurch gekennzeichnet, daß die Referenzwerte als Schwellwert für eine Ankopplungsreaktion verwendet werden.

17. Verfahren nach einem der vorhergehenden Ansprüche, dadurch gekennzeichnet, daß das Verfahren zum Nachweis von DNA's oder RNA's eingesetzt wird, wobei die Referenzwerte lediglich die Funktion übernehmen zu definieren, ob eine Kopplungsreaktions stattgefunden hat oder nicht.

18. Verfahren nach einem der vorhergehenden Ansprüche, dadurch gekennzeichnet, daß zur Veränderung der Empfindlichkeit des Verfahrens zusätzlich eine Kopplung zwischen den zu bestimmenden Molekülen oder Atomen und anderen Molekülen oder Atomen genutzt wird.
